**Europäisches Patentamt**

**European Patent Office**

**Office européen des brevets**

(11) Veröffentlichungsnummer: **0 353 338**

**A1**

# (12) EUROPÄISCHE PATENTANMELDUNG

(21) Anmeldenummer: **88114172.5**

(22) Anmeldetag: **31.08.88**

(51) Int. Cl.4: **A01M 25/00 , A01G 13/10**

(30) Priorität: **04.08.88 DE 8809940 U**

(43) Veröffentlichungstag der Anmeldung:
**07.02.90 Patentblatt 90/06**

(84) Benannte Vertragsstaaten:
**AT BE CH DE ES FR GB GR IT LI LU NL SE**

(71) Anmelder: **Vogt, Helmut**
**Freudenstädter Strasse 45**
**D-7298 Lossburg(DE)**

(72) Erfinder: **Vogt, Helmut**
**Freudenstädter Strasse 45**
**D-7298 Lossburg(DE)**

(74) Vertreter: **Ott, Elmar, Dipl.-Ing.**
**Kappelstrasse 8**
**D-7240 Horb 1(DE)**

(54) **Schneckenfalle.**

(57) Die Erfindung betrifft eine Schneckenfalle zur Vernichtung von Gartenschnecken, die aus einem Rohrgehäuse (1) besteht, das an einer Seite eine entlang des Gehäuses verlaufende Gehäuseaussparung (2) aufweist. Die Unterkante des Rohrgehäuses ist dabei als eine nach außen abfallende schräge Fläche (4) ausgebildet und stellt eine rampenartige Einlauffläche für die Schnecken dar. Die Oberkante (5) der Gehäuseaussparung (2) ist teilweise über die schräge Fläche (4) geführt und schützt somit den Innenraum des Rohrgehäuses (1) vor Eindringen von Regenwasser, wodurch auch verhindert wird, daß das im Rohrgehäuse 1 befindliche Schneckenkorn (8) sich auflöst und dessen Giftbestandteile in das Erdreich eindringen können. Da die Schneckenfalle aus elastischem Kunststoff gefertigt ist, lassen sich die Rohrgehäuse, falls längere Stücke gebraucht werden, zusammenstecken und können somit jeder Garten- oder Beetform angepaßt werden.

_Fig. 1_

## Schneckenfalle zur Vernichtung von Gartenschnecken

Die Erfindung betrifft eine Schneckenfalle zur Vernichtung von Gartenschnecken.

Schneckenfallen dieser Art finden ihr hauptsächliches Anwendungsgebiet in Gartenanlagen zum Schutz der Beete vor Schneckenbefall sowie auf Friedhöfen, auf denen die Grabbepflanzungen ebenfalls vor Schneckenbefall geschützt werden sollen.

Es sind Schneckenfallen der obengenannten Gattung in verschiedenen Ausformungen bekannt. Als nachteilig erweist sich bei diesen, daß das als Anlock- und Vernichtungsmittel für die Schnecken zur Anwendung kommende Schneckenkorn oftmals direkt mit der Erde in Berührung kommt, was den Nachteil in sich birgt, daß sich das Schneckenkorn bei Regen auflöst bzw. dessen giftige Bestandteile in den Boden gelangen können. Auch wird dadurch dessen Wirksamkeit im Hinblick auf die Schneckenvernichtung aufgehoben. Als nachteilig erweist sich des weiteren, daß diese Geräte von Schnecken oftmals überwunden oder umgangen werden können, insbesondere bei größeren vor Schneckenbefall zu schützenden Flächen. Oftmals weisen diese Geräte auch scharfe Ecken und Kanten auf, die insbesondere für Kinder eine Verletzungsgefahr darstellen.

Der Erfindung liegt die Aufgabe zugrunde, eine Schneckenfalle der eingangsgenannten Art zur Vernichtung von Gartenschnecken zu schaffen, die bei möglichst niedrigen Gesamtgestehungskosten eine großflächige Wirksamkeit gewährleistet sowie das zur Anlockung und Vernichtung von Schnecken verwandte Schneckenkorn vor Regen und sonstigen äußeren Einflüssen schützt.

Die Lösung der Aufgabe wird erfindungsgemäß dadurch erreicht, daß die Schneckenfalle aus einem Rohrgehäuse besteht, das an einer Seite eine Gehäuseaussparung enthält.

Das als Anlock- und Vernichtungsmittel gegen die Schnecken eingesetzte Schneckenkorn wird in das Rohrgehäuse eingestreut und lagert sich im unteren Bereich des, Rohrgehäuses ab. Das Schneckenkorn kommt somit mit dem Erdreich nicht mehr in Kontakt, da es im Rohrgehäuse einliegt, das lediglich an einer Seite eine Öffnung enthält. Dadurch ist insbesondere gewährleistet, daß Regenwasser mit dem Schneckenkorn nicht mehr in Berührung kommt. somit eine Auflösung des Schneckenkorns sowie das Eindringen dessen giftiger Bestandteile in das Erdreich verhindert wird. Insbesondere aus Gründen des Umweltschutzes erweist sich daher die Erfindung als vorteilhaft. Darüber hinausgehend vermindert sich auch der Verbrauch des Schneckenkorns, da dieses nicht mehr weggespült bzw. durch Regeneinflüsse aufgelöst werden kann. Schließlich ist das im Rohrgehäuse eingelagerte Schneckenkorn nicht mehr sichtbar, was insbesondere zur Gefahrenbeseitigung im Hinblick auf spielende Kinder beiträgt. Die abgerundete Rohrgehäuseform vermindert auch das Verletzungsrisiko beim Hantieren mit dem Gerät, da es nahezu keine scharfen Ecken oder Kanten aufweist.

Dadurch, daß die Gehäuseaussparung über die gesamte Länge des Rohrgehäuses ausgebildet ist, wird die Wirksamkeit der Schneckenfalle im Hinblick auf die gesamte Fläche, die von ihr eingeschlossen wird, sichergestellt. Es bestehen somit für die Gartenschnecken nahezu keine Möglichkeiten mehr, das Hindernis zu umgehen. Eine besonders vorteilhafte Weiterbildung der Erfindung sieht vor, daß die Unterkante der Gehäuseaussparung als eine nach außen abfallende schräge Fläche ausgebildet ist.

Die durch das Schneckenkorn angelockten Schnecken erreichen über die schräge Fläche das im unteren Teil des Rohrgehäuses befindliche Schneckenkorn und verlassen die Schneckenfalle nach dem Fressen des Giftes wieder auf demselben Wege, wo sie nach ca. 10 bis 20 cm liegen bleiben und austrocknen. Dadurch ist insbesondere sichergestellt, daß die Schnecken die Schneckenfalle nicht durchqueren bzw. auf die von der Schneckenfalle eingeschlossene Fläche hindurchkriechen können. Vielmehr werden diese in ihre Ausgangsrichtung zurückgeleitet und somit von der zu schützenden Fläche fern gehalten. Durch die am Rohrgehäuse ausgeformten schrägen Fläche wird desweiteren ein besserer Halt der Schneckenfalle in abfallendem Gelände erreicht, so daß auch deren Einsatz an Hanglagen ermöglicht ist.

Durch die in Ansprüchen 4 und 5 genannten Merkmale ist sichergestellt, daß kein Regenwasser bzw. sonstiger Niederschlag in den unteren Teil des Rohrgehäuses gelangen und mit dem dort befindlichen Schneckenkorn reagieren kann. Die Innenseite des Rohrgehäuses wird im trockenen Zustand gehalten, wodurch auch die Verschmutzung und somit die Reinigungserforderlichkeit des Gerätes geringgehalten ist.

Die erfindungsgemäße Schneckenfalle ist bevorzugt so ausgeführt, daß das Rohrgehäuse aus elastischem Kunst stoff besteht.

Die Schneckenfalle ist daher leicht und gut transportabel. Auch sind deren Herstellungskosten gering. Durch die Elastizität des Kunststoffes ist es auch möglich, mehrere Rohrgehäuse ineinander zu schieben, so daß die Schneckenfalle entsprechend einer gewünschten Länge zusammengesetzt werden kann. Aufgrund der elastischen Beschaffenheit der Schneckenfalle können daher Gartenbeete oder auch auf Friedhöfen befindliche Gräber mit den Rohrgehäusen der Schneckenfalle eingefaßt und somit deren innenliegende Fläche vor Schnekkenbefall geschützt werden. Auch erlaubt das aus Kunststoff bestehende Rohrgehäuse eine unproblematische Reinigung sowie den Einsatz der Schnekkenfalle in feuchten Gebieten, ohne daß etwaige Schäden durch Korrosion usw. zu befürchten wären.

Eine bevorzugte Ausführungsform der erfindungsgemäßen Schneckenfalle besteht auch darin, daß an den Stirnenden des Rohrgehäuses ein Abschlußdeckel aus elastischem Kunststoff angebracht ist.

Dadurch ist es möglich das Rohrgehäuse bzw. mehrere zusammengesteckte Rohrgehäuse an den Enden zu verschließen und abzudichten.

Dadurch daß der Abschlußdeckel einen in das Rohrgehäuse geführten, sich nach innen verjüngenden, Rand aufweist ist ein guter Halt des Abschlußdeckels am Rohrgehäuse gewährleistet sowie dessen Anbringung erleichtert. Auch stellt dessen Entfernung etwa zum Zwecke des Anfügens eines weiteren Rohrgehäuses oder zu dessen Reinigung, kein Problem dar.

Die Erfindung wird nachfolgend anhand der Zeichnung näher erläutert. Es zeigen:

Figur 1 eine erfindungsgemäße Schneckenfalle räumlich dargestellt,

Figur 2 eine erfindungsgemäße Schneckenfalle im Schnitt und

Figur 3 einen Abschlußdeckel im Schnitt.

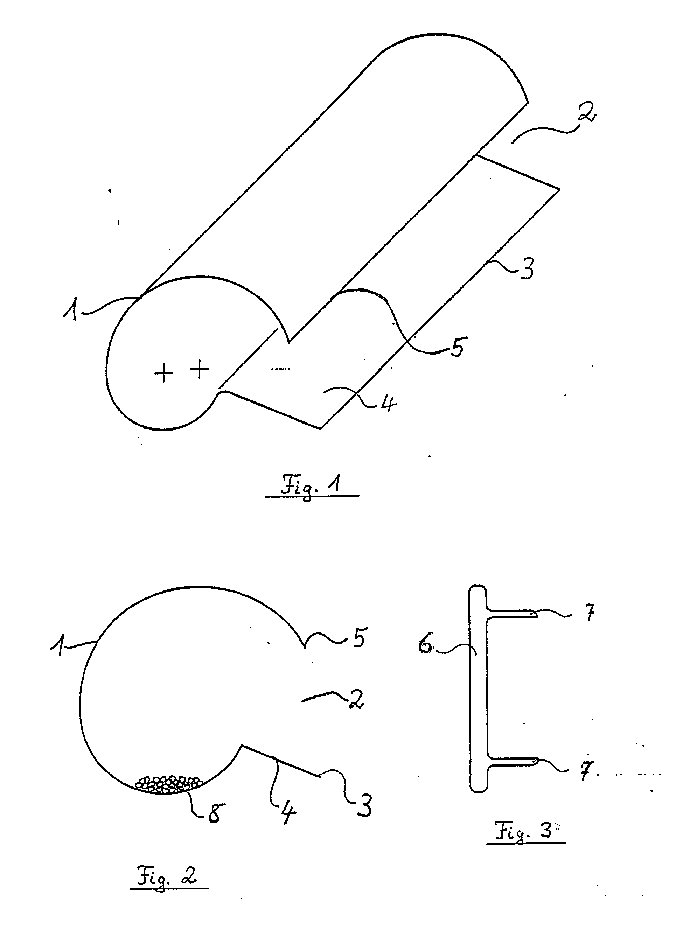

Figur 1 zeigt das Rohrgehäuse 1 der Schneckenfalle, an dessen einer Seite sich eine Gehäuseaussparung 2 befindet. Die Unterkante 3 der Gehäuseaussparung 2 ist dabei so ausgebildet, daß sie nach außen in Form einer schrägen Fläche 4 abfällt. Diese bildet gleichzeitig eine rampenartige Einlauffläche für die Schnecken sowie eine lagerungsstabile Abstützung des Rohrgehäuses 1. Die Oberkante 5 der Gehäuseaussparung 2 ist teilweise über die Schrägefläche 4 geführt und stellt für diese eine Überdachung dar.

Das durch Figur 2 im Schnitt dargestellte Rohrgehäuse 1 zeigt an dessen einer Seite eine Gehäuseaussparung 2, deren Unterkante 3 führt von der abgerundeten Unterseite des Rohrgehäuses 1 als eine nach außen abfallende schräge Fläche 4. Der obere Teil des Rohrgehäuses 1 weist einen größeren Durchmesser auf als der untere abgerundete Teil des Rohrgehäuses. Dabei ist das Rohrgehäuse 1 bis zur Oberkante 5 der Gehäuseaussparung 2 teilweise über die schräge Fläche 4 geführt. Weiterhin ist in der Zeichnung die Lage des Schneckenkornes 8 im unteren Teil des Rohrgehäuses 1 dargestellt. Dieses wird durch die Gehäuseaussparung 2 in das Rohrgehäuse 1 eingebracht und lagert sich dann in dessen unterem Bereich ab.

Der in Figur 3 im Schnitt dargestellte Abschlußdeckel 6 weist an der in das Rohrgehäuse 1 einzuführenden Seite einen sich nach innen verjüngenden Rand 7 auf. Der auf das Rohrgehäuse 1 aufgesetzte Abschlußdeckel 6 ist mittels dieses Randes im Rohrgehäuse 1 verankert und schließt damit das an den Stirnseiten offene Rohrgehäuse 1 seitlich nach außen ab.

Die erfindungsgemäße Schneckenfalle kann aufgrund Ihrer röhrenförmigen Profilierung auch ohne Schneckenkorn Verwendung finden, da die Schneckenfalle eine für die Schnecken unüberwindbare Barriere bildet.

## Ansprüche

1. Schneckenfalle zur Vernichtung von Gartenschnecken, **dadurch gekennzeichnet**, daß diese aus einem Rohrgehäuse (1) besteht, das an einer Seite eine Gehäuseaussparung (2) aufweist.

2. Schneckenfalle nach Anspruch 1, **dadurch gekennzeichnet**, daß die Gehäuseaussparung (2) über die gesamte Länge des Rohrgehäuses (1) ausgebildet ist.

3. Schneckenfalle nach Anspruch 1 oder 2, **dadurch gekennzeichnet**, daß die Unterkante (3) der Gehäuseaussparung (2) als eine nach außen abfallende schräge Fläche (4) ausgebildet ist.

4. Schneckenfalle nach einem der vorhergehenden Ansprüche, **dadurch gekennzeichnet**, daß die obere Hälfte des Rohrgehäuses (1) einen größeren Durchmesser aufweist als die untere Hälfte des Rohrgehäuses (1).

5. Schneckenfalle nach einem der vorhergehenden Ansprüche, **dadurch gekennzeichnet**, daß die Oberkante (5) der Gehäuseaussparung (2) teilweise über die schräge Fläche (4) geführt ist.

6. Schneckenfalle nach einem der vorhergehenden Ansprüche, **dadurch gekennzeichnet**, daß das Rohrgehäuse (1) aus elastischem Kunststoff besteht.

7. Schneckenfalle nach einem der vorhergehenden Ansprüche, **dadurch gekennzeichnet**, daß an den Stirnenden des Rohrgehäuses (1) ein abnehmbarer Abschlußdeckel (6) aus elastischem Kunststoff angebracht ist.

8. Schneckenfalle nach Anspruch 7, **dadurch gekennzeichnet**, daß der Abschlußdeckel (6) einen in das Rohrgehäuse (1) geführten, sich nach innen verjüngenden, Rand (7) aufweist.

_Fig. 1_

_Fig. 2_

_Fig. 3_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-632898 (R.C.HOFMANN)<br>* Seite 2, rechte Spalte, Zeilen 9 - 38; Figuren 1-4 *<br>--- | 1-2, 4, 6 | A01M25/00<br>A01G13/10 |
| X<br><br>A | GB-A-2146882 (HOPWOOD KAY HOPWOOD LTD.)<br>* Zusammenfassung; Figur *<br><br>--- | 1-2, 4, 6<br><br>7 | |
| X | DE-A-3327048 (H.ERNST)<br>* das ganze Dokument *<br>----- | 1-2 | |

| RECHERCHIERTE SACHGEBIETE (Int. Cl.5) |
|---|
| A01M<br>A01G |

Der vorliegende Recherchenbericht wurde für alle Patentansprüche erstellt

| Recherchenort | Abschlußdatum der Recherche | Prüfer |
|---|---|---|
| DEN HAAG | 27 OKTOBER 1989 | NEHRDICH H.J |